# EUROPEAN PATENT APPLICATION

(11) **EP 4 186 663 A1**
(43) Date of publication of application: **31.05.2023**
(21) Application number: 21211107.4
(22) Date of filing: 29.11.2021
(51) Int. Cl.: B26D 7/26, B23Q 1/26, B26F 1/38

(54) **THERMALLY INSENSITIVE ROTARY DIE SYSTEM**

(71) Applicant: Madern, Jean Henry Robert, 3137 CA Vlaardingen (NL)
(72) Inventor: Zeestraten, Martijn, Vlaardingen (NL)
(74) Representative: Nederlandsch Octrooibureau

(57) **Abstract**

A rotary die system includes a base structure configured to support first and second cylinders in a rotatable manner about parallel axes that jointly span a plane, the cylinders defining two respective contacting surfaces along which the cylinders touch, as well as two respective processing surfaces that are interspaced by a non-zero gap directed along an inter-axis direction along the plane; two first bearing blocks configured to enclose the first cylinder from opposite sides along the respective axis. Each of the first bearing blocks is composed of an inner block configured for accommodating a bearing of the first cylinder; an outer block with a cut-out accommodating the inner block; a tensioning element on the inner block, and flexure hinges that mechanically interconnect the inner and outer blocks, wherein the inner block, the outer block, and the flexure hinges in each first bearing block are jointly formed from a single body of solid material.

## Description

### Technical field

The invention relates to a rotary die system. The invention further relates to a bearing block for a rotary die system. Furthermore, the invention relates to a method for manufacturing such a bearing block.

### Background

Patent US 6350061 B1 relates to bearings in a rotary cutter. It describes a system for fixing and guiding a bearing in a slot in a frame comprising elongate flat fixing members extending straddle-fashion between the coplanar respective end faces of the respective uprights of the frame and of the bearing. Extending through each of said fixing members are three cut-outs, one of which is in the form of an elongate closed opening and the other two in the form of slots open at one of their ends, disposed at the respective two ends of the elongate opening. A strip perpendicular to the uprights is formed between the elongate opening and each of the open slots adapted to form in the said fixing member two fixing lugs disposed on either side of the slot, one lug being fixed to the upright and the other to the bearing.

In prior art rotary die systems, temperature variations within the system occur during operation. Such variations cause thermal stresses and/or deformations which cause variations in the load on the bearer of the cylinders of the rotary die system.

It is an object of the invention to provide a rotary die system including a bearing block that reduces or compensates thermal load variations in the bearer due to temperature-induced deformations.

### Summary of the invention

The object is achieved by a rotary die system, comprising:
a base structure configured to support first and second cylinders in a rotatable manner about substantially parallel nominal axes that jointly span a plane, the cylinders defining two respective contacting surfaces along which the cylinders touch, as well as two respective processing surfaces that are interspaced by a non-zero gap directed along an inter-axis direction along the plane;
two first bearing blocks configured to enclose the first cylinder from opposite axial sides along the respective axis, and configured to support the combined weight of at least the first cylinder and the first bearing blocks, wherein each of the first bearing blocks is composed of:
   an inner block member configured for accommodating a bearing holding a rotatable shaft of the first cylinder;
   an outer block member with a cut-out accommodating the inner block member;
   a tensioning element for creating a biasing force on the inner block member relative to the outer block member, and a plurality of flexure hinges that mechanically interconnect the inner and outer block members, so as to allow the inner block member to translate relative to the outer block member along the inter-axis direction, but to prevent relative motion of the inner block member along transverse directions, while the rotary die system is operational and the cylinders are rotating;
   wherein either the inner block member, the outer block member, and the flexure hinges in each respective first bearing block are jointly formed from a monolithic/unitary body of continuous solid material, or the inner block member and the outer block member in each respective first bearing block are interconnected by separate flexure hinges that are mounted in a fixed position in the cut-out between the inner and outer block members.

The arrangement of the flexure hinges as interconnection between the inner and outer block members of the bearing block provide that the effect of temperature variation between the first cylinder and the bearing blocks on the gap between the first cylinder and the second cylinder is reduced. This is especially beneficial for rotary die systems in which thermal differences (heating during operation and cooling during downtime between productions) can occur over relatively short times.

According to an aspect, the invention provides a method for manufacturing a bearing block for a rotary die system comprising:
providing a rectangular metal body;
creating a central opening in the centre of the metal body;
creating a contour cut substantially around the central opening to substantially divide the body into an inner and outer block member;
providing flexure hinges as interruptions along the contour cut at at least three locations around the opening to interconnect the inner and outer block members, or providing separate flexure hinges as interconnections between the inner and outer block member by mounting the flexure hinges in a fixed position in the cut-out between the inner and outer block members.

Advantageous embodiments are further defined by the dependent claims.

### Brief description of the drawings

The invention will be explained in more detail below with reference to drawings in which illustrative embodiments of the invention are shown. It will be appreciated by the person skilled in the art that other alternative and equivalent embodiments of the invention can be conceived and reduced to practice without departing from the true spirit of the invention, the scope of the invention being limited only by the appended claims.
Figure 1 shows a perspective view of a rotary die system known in the art;
Figure 2A, 2B show a graph of the evolution of the gap between cylinders of the rotary die system as a function of time during operation of the rotary die system, under mechanical and temperature constraints;
Figure 3 shows a perspective view of a rotary die system according to an embodiment of the invention, where the base structure has been omitted;
Figures 4A, 4B show a front view of a bearing block of an upper cylinder of a rotary die system according to a respective embodiment of the invention;
Figures 5A, 5B show a detailed front view of a bearing block of an upper cylinder of a rotary die system according to a respective embodiment of the invention.

In the drawings, entities in a figure that are either substantially identical or equivalent to corresponding entities in another of the figures have a same reference.

### Detailed description of embodiments

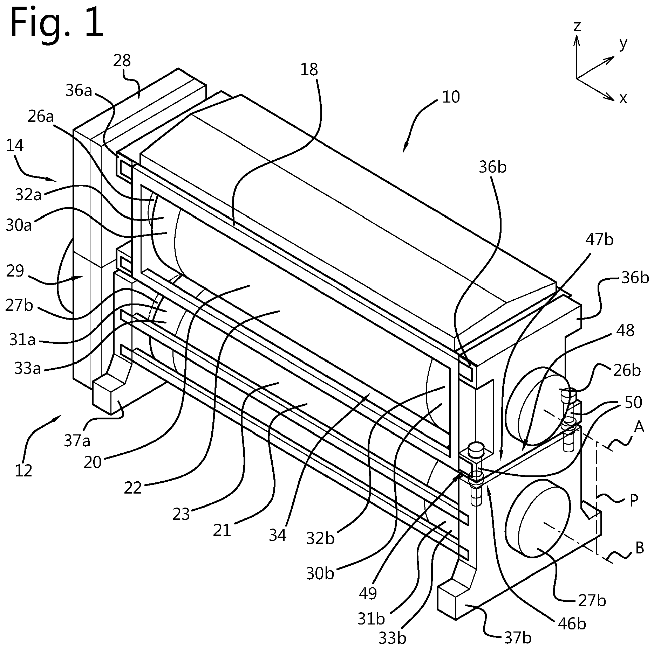

Figure 1 shows a perspective view of a rotary die system 10 known for processing a web of cardboard or other material including inter alia polymer sheet, metal sheet and non-woven sheet materials. The processing consists in either cutting or forming the web into shape as preparation for post-processing. An example of post-processing is creation of food packages. The rotary die system 10 comprises a base structure 14 on a support surface 12, a first cylinder 20 and a second cylinder 21 in the base structure and made of steel or other appropriate construction material. The system 10 is represented in a Cartesian coordinate system XYZ of which the support surface 12 corresponds to the plane defined by first and second transverse axis X (arrow X) and Y (arrow Y). X represents a cross direction i.e., along the length of the first and second cylinders 20, 21 while Y represents a machining direction. The base structure 14 extends mostly in the third direction along the vertical axis Z (arrow Z) of XYZ, traverse the axes of the first and second cylinders that are mounted parallel to each other. The base structure 14 is used to contain and/or support at least a part of a superposition of the first and second cylinders 20, 21 along the axis Z. The base structure 14 may be a frame.

The first and second cylinders 20, 21 are superposed and fixed to the base structure 14 and further attachable to a drive system for driving to rotate the cylinders within the base structure. The driving to rotate is insured by power means, a first 28 and a second 29 drive gear in the base structure 14. The first cylinder 20 corresponds to the upper cylinder in the base structure 14 along direction Z. Accordingly, the second cylinder 21 corresponds to the lower cylinder in the base structure 14.

Webs of materials can be introduced in the free space or gap 34 between the first and second cylinders 20, 21 substantially along, preferably along, the machining direction Y. During use, each of the first and second cylinders is driven to rotate along their respective roll axis, described as first and second roll axis A, B, driven into motion by a roll drive 15. Both cylinders lie in the same inter-axle plane P comprising parallel axis A and B.

The first and upper cylinder 20 is known as a processing roll as it serves as the means to perform an cutting or forming action on the web material via a first processing surface 22. The processing roll can be used for various process such as cutting, creasing, punching and embossing.

In this example, the second lower cylinder serves as the support for the web of material introduced in gap 34 providing a surface, described as second processing surface 23, against which the action of cutting or forming into shape is performed by the first cylinder. Optionally, the second cylinder may also perform cutting or forming operations on the web material.

The first cylinder 20 (and optionally the second cylinder) comprise processing means such as elongated blades or other means such as an edges profile to pre-process the web into a shape. Each of the first and second cylinders 20, 21 comprise at each end a first bearer ring 30a, 30b and a second bearer ring 33a, 33b providing at each end a first and second contact surface 31a, 31b, 32a, 32b, the first and second contact surfaces touching at each end of the cylinders. In the middle of each cylinder between the contact surfaces, the respective processing surfaces 22, 23 are interspaced by the non-zero gap, i.e., gap height 34 measurable along the inter axis direction Z along the plane P. In the non-zero gap 34 the web of material is inserted in the machining direction Y.

The first cylinder 20 comprises a first cylinder bearing 26a, 26b at each end that accomodates a shaft 24 of the first cylinder. The second cylinder 21 comprises a second cylinder bearing 27a, 27b at each end. The base structure 14 comprises a set of first bearing blocks 36a, 36b for the first upper cylinder 20 and second bearing blocks 37a, 37b or the second lower cylinder 21. As shown in this example from the prior art, the two bearing blocks of each set may be connected by one or more bridges 18 that extend along the cylinders in the base structure 14. The first bearing blocks 36a, 36b are configured to enclose and take on the load Wz of the first cylinder 20 from opposite axial sides at each first cylinder bearing 26a, 26b.

The second cylinder 21 is in contact with the first cylinder 20 from opposite axial sides at each first cylinder bearing 27a, 27b through the contact surfaces 31a, 32a; 31b, 32b between the bearer rings 30a, 30b; 33a, 33b of the first and second cylinder 20, 21.

The bearing blocks 36a, 37a on one side and the bearing blocks 36b, 37b on the other side superpose in a plane perpendicular to cylinder axes A and B. The distance along direction Z between the two superposed bearing blocks, i.e., the inter-block spacing 48 between a first block edge 46a, 46b of the first bearing block and a second block edge 47a, 47b of the second bearing block, and so the distance along direction Z between the cylinders, may be adjusted by moving the first cylinder bearing 26a, 26b along at least one block spacer in the same plane (not shown) connecting it to the second cylinder bearing 27a, 27b. The inter-block spacing 48 is adjustable by a pack 49 of one or more shims between the bearing blocks 36a, 37a; 36b, 37b fastened with a bolt 50. In this manner a bias force can be preset for pressing the contact surfaces 31a, 32a; 31b, 32b together.

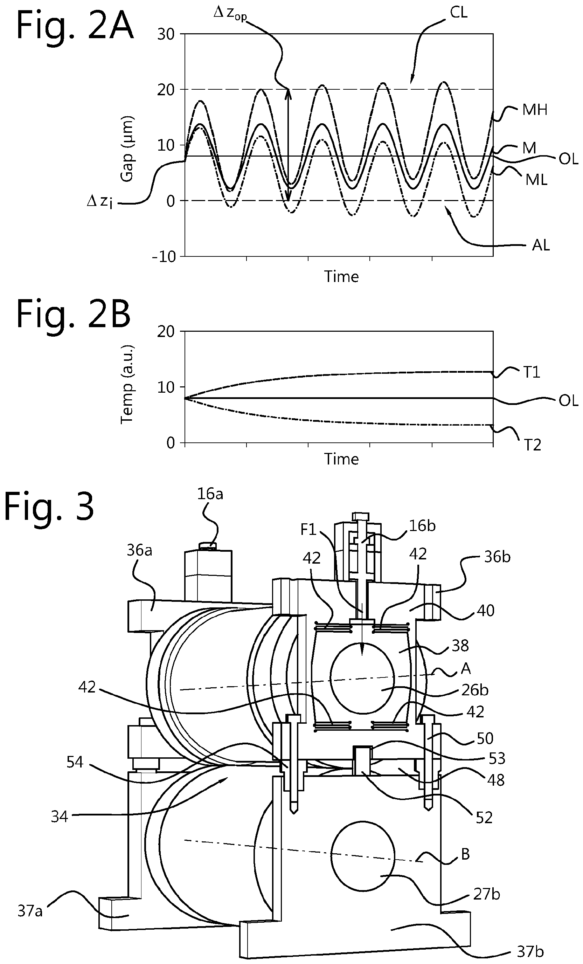

Figure 2A shows a schematic graph illustrating an observed schematic evolution of the gap 34 (shown values are indicative only, in µm) between first and second processing surfaces 22, 23 of the first cylinders 20, 21 as function of time in a known rotary die 10 of the art, such as the one in Fig. 1. Fig 2B shows exemplary temperature evolutions during operation of a rotary die system. The temperature scale is indicative only.

Before the rotary die system is powered the first and second bearings 26a, 26b, 27a, 27b are securely superposed and fixed to each other with a predetermined bias force, separated by the packs of shims in the inter-block spacing 48 as defined earlier.

Initially, and right after starting operation, the cylinders are separated by an initial gap Δzi defined by the positioning of the cylinders together with the first bearing blocks. The gap between first processing surface 22 of the first cylinder 20 and second processing surface 23 of the second cylinder 21 along axis Z can be defined as a difference between the cutting surface on the second cylinder and the anvil surface on the first cylinder. A gap in board operation window Δzop, defined as Δzop = CL - AL, is required for operational functioning of the rotary die to cut and/or shape the material web inserted along machining direction Y in the gap. Level CL corresponds to the cut limit, i.e., the maximum height along direction Z in inter-axle plane P at which the first cylinder 20 can be positioned for operational cutting or pre-processing of the material web. AL corresponds to the anvil limit or the minimum height along direction Z in plane P at which the second cylinder 21 may be positioned for supporting the cutting and/or pre-processing action and the material web onto which the action is done. At level AL, the cutting edges at the first cylinder 20 abut the cutting surface of the second cylinder 21. The nominal gap during operation is indicated by the horizontal line OL.

Under normal working conditions, the cylinders are subject to varying mechanical loads and thermal effects ts. As a result, the gap distance will vary during operation. A first variation of the gap will occur due to spring-like elastic response to mechanical load variation. A second variation of the gap is caused by temperature differences between the base structure 14 and the bearings 26a, 27a; 26b, 27b, and/or a temperature difference between a cylinder and the bearing rings on which the cylinder is mounted.

Fig 2B shows exemplary temperature evolutions during operation of a rotary die system. The temperature T of the system tends to increase during operation of the rotating cylinders. Upon a temperature difference between bearing block and cylinder where the temperature T1 of the bearer blocks increases relative to the cylinder temperature Tc (T1 > Tc) , the gap is shown to increase from OL to a larger gap superiorto OL overtime. Upon a temperature difference between the bearing blocks and the cylinder where the temperature T2 of the bearer block decreases relative to the cylinder temperature Tc, (T2 < Tc) the gap is shown to decrease from OL to a smaller gap inferior to OL over time.

It will be appreciated that the temperature of the rotary die system will change gradually during operation, on a typical time-scale of hours, e.g. between 2 to 6 hrs. In comparison, the gap variation due to mechanical load variation will be on a shorter time scale of seconds or less, based on the rotation speed of the cylinders. For this reason, the gap change is only depicted schematically in Fig 2A:
Upon repeated rotation along their longitudinal axis the cylinders are subject to forces in Z direction. The consequence of the mechanical effect M is illustrated by a gap oscillating (i.e., by the first variation) within the operational range, up and down around the nominal value OL, according to the solid curve M. Upon combined effect of mechanical and temperature effects (i.e., by the second variation) the gap oscillates and can increase (for the condition T1 > Tc) beyond CL (schematically illustrated by dashed curve MH) so above the operational range which results in a gap that is too large to process the web material successfully. Alternatively, for the condition T2 < Tc the temperature effect combined with mechanical effects (schematically illustrated by dash-dotted curve ML) results in the gap decreasing to a smaller gap possibly even smaller than AL, so below the operational range to a zero-gap resulting in deformation of the edges on the first cylinder 20 when touching the surface of the second cylinder 21. The cylinders thus also may be subject to displacing within the bearing blocks, leading to inevitable wear.

Figure 3 shows a perspective view of a rotary die system according to an embodiment of the invention, where some parts of the base structure have been omitted for visualization purposes. Here the details are shown of the bearing system that carries the first and second cylinders 20, 21. The bearing system comprises a first bearing block 36b that carries the axis of the first cylinder 20, and a second bearing block 37b that carries the axis of the second cylinder 21.

The first bearing block 36a, 36b comprises an inner block member 38 and an outer block member 40. The first bearing block 36a, 36b is superposed and secured onto the second bearing block 37a, 37b by a block spacer 52 and at least two block tensioning members 50. The block tensioning members 50 may be tie rods. Shims or adjustment nuts 54 may be used to preset the inter-block spacing 48, as explained above. A centering plug 52 is arranged between a top side of the second bearing block 37a; 37b and an opening 53 in a bottom side of the first bearing block 36a, 36b.

A pressure jack or tensioning element 16a, 16b is positioned onto each first bearing block 36a, 36b at each end of the first cylinder 20. The pressure jacks 16a, 16b are configured for exerting a downward force, i.e., a pre-tensional or biasing force F1, on the inner block member 38 relative to the outer block 40.

The second bearing block 37a, 37b is made from one block of material receiving the second cylinder 21.

The inner block member 38 and the outer block member 40 of the first bearing block are interconnected by at least three translational flexure hinges 42 comprising at least a pair of parallel flexure blades, of which flexure hinges two of the at least three flexure hinges are placed at the top two corners of the inner block member 38 above (along Z) the level of the axis A of the first cylinder 20 or alternatively at the bottom two corners of the inner block member 38 below (along Z) the level of the axis A of the first cylinder 20. The other third flexure hinge is then placed respectively centered at the bottom or top of the inner block member, alone.

Alternatively, the inner block member 38 may be interconnected to the outer block member 40 by four flexure hinges arranged at four corners around the first cylinder 20.

According to the invention, the flexure hinges are oriented to have the blades extending in the XY plane with the thinnest dimension in the Z-direction.

According to an embodiment, the inner block member 38, the outer block member 40 and the translational flexure hinges 42 are formed in a unibody design from one block (unitary block or "uniblock") of material in which the flexure hinges form the connection between the outer and inner block members. The packets of translational flexure hinges 42 may consist in an array of leaf springs formed integral to the uniblock.

By their structure, the translational flexure hinges provide reatively high stiffness in the X and Y direction and a relatively lower stiffness in the Z direction. This prevents the inner block member from displacing in X and Y direction, while being relatively flexible in Z direction.

In an alternative embodiment, the flexure hinges are mounted between the inner block member and the outer block member in which the width of the flexure hinges is substantially the same as the thickness of both the outer and inner block members.

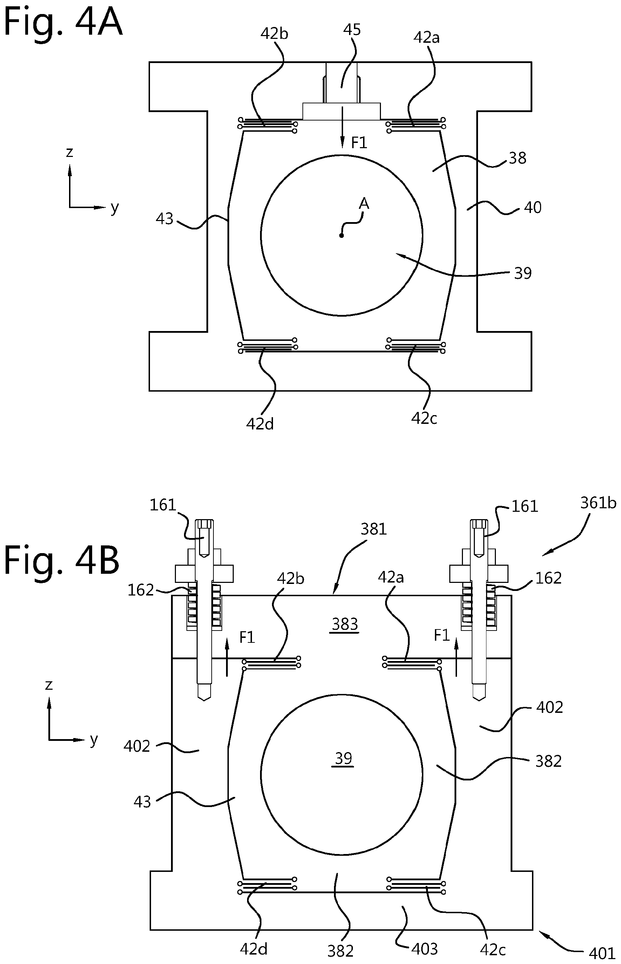

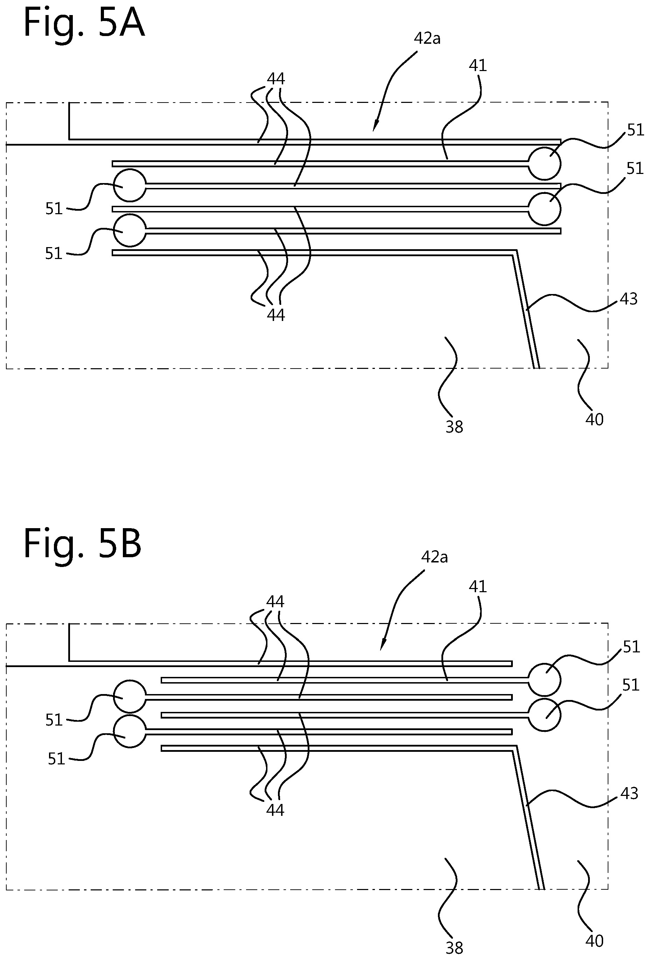

More details will be given on the flexure hinges, their design and formation within the bearing block in the description of Fig. 4A and Fig 4B, and Fig. 5A and Fig 5B.

Figure 4A shows a front view of a first bearing block 36b at one side of a rotary die according to an embodiment of the invention and as shown in Fig. 3. The bearing block 36a at the other side of the rotary die (not shown) is identical, as for Fig. 3. The first bearing block 36b comprises a bearing through hole 39 for receiving the first cylinder bearing 26b. The bearing through hole 39 has a shape matching with the shape of the first cylinder bearing 26b: If for example the first cylinder bearing 26b is circular, the bearing through hole 39 is circular as well so as to be capable to receive the full circumference of the cylinder bearing.

The first bearing block 36b further comprises in the same plane along direction Z an inner block member 38 and an outer block member 40. The inner block member 38 has inner edges corresponding with the peripheral edges of the through hole 39 and extends around the through hole. The inner block member may have any shape, preferably a rectangular shape, most preferably a substantially convex shape on each vertical side of the block member around the through-hole. The outer block member 40 surrounds the outer edges of the inner block member 38, separated by a contour cut of intra-block clearances 43.

In the so-called uniblock design, the inner and outer block members are formed from one block by cutting though the depth of the one block that will become bearing block 36a/36b, to form the intra-block clearances 43. The outer and inner block members 38, 40 are interconnected via three or more integral flexure hinges at three or more positions along the interface between inner and outer block member, each position corresponding to an interruption in the contour cut of the intra block clearances 43. The three or more flexure hinges comprise at least two of the flexure hinges symmetrically disposed around an element 45 above the through hole 39. The element 45 is arranged below the pressure jack or tensioning element 16a; 16b and is configured to transmit the biasing force F1 created by the pressure jack.

Figure 4B shows a front view of a first bearing block 361b at one side of a rotary die according to an embodiment of the invention.

Similar as illustrated with reference to the embodiment of Fig 4A: The bearing block 361a at the other side of the rotary die (not shown) is identical. The first bearing block 361b comprises a bearing through hole 39 for receiving the first cylinder bearing (not shown). The bearing through hole 39 has a shape matching with the shape of the corresponding first cylinder bearing.

The first bearing block 361b further comprises in the same plane along direction Z an inner block member 381 and an outer block member 401.

The inner block member 381 has inner edges corresponding with the peripheral edges of the through hole 39 and extends around the through hole. The inner block member 381 has substantially a T-shape. The outer block member 401 has substantially a U-shape that surrounds the outer edges of the upright part 382 of the inner block member 381, separated by a contour cut of intra-block clearances 43.

The horizontal top part 383 of the inner block member 381, is fastened to the uprights 402 of the outer block member 401 by fasteners 161 and springs 162. The fasteners 161 are tightened and function as tensioning elements to create a biasing force F1 between the inner block member 381 and the outer block member 401.

In a uniblock design, the inner and outer block members are formed from one block by cutting through the depth of the one block that is bearing block 361b, to form the intra-block clearances 43. The outer and inner block members 381, 401 are interconnected via three or more flexure hinges 42 at three or more positions along the interface between inner and outer block member: between each upright 402 of the outer block member 401 and the horizontal top 383 of the inner block member 381 and at least one between the lower portion of the upright part 382 of the inner block member 381 and the horizontal bottom part 403 of the outer block member 401, each position corresponding to an interruption in the contour cut of the intra block clearances 43. The three or more flexure hinges comprise at least two of the flexure hinges symmetrically disposed at the region between the horizontal top part 383 and upright part 382 of the inner block member 381above the through hole 39.

Alternatively to the above described uniblock designs, the outer and inner block member can be embodied by separately fabricated elements that interconnected to each other with separate flexure hinges at positions as explained above with reference to figures 4A and 4B. In these alternative embodiments, the flexure hinges are mounted and fixed between the inner and outer block members to create a fixed connection therebetween. The flexure hinges comprise at least one pair of parallel flexure blades that have a width that is substantially the same as the thickness of the inner and outer block members and extends in the same thickness direction. That is, the thickness in the X direction when assembled in the rotary die system, perpendicular to the YZ viewing plane of fig 4A, 4B.

The skilled in the art will appreciate that such mounted design is substantially equivalent to the above described uniblock design.

Figures 5A, 5B show a detailed front view of a bearing block of an upper cylinder of a rotary die system according to a respective embodiment of the invention.

Each flexure hinge 42 consists in a series of at least two parallel and stacked flexure blades 41, formed by cutting elongated parallel cut outs 44 with a hole 51 drilled at their ends (see Fig. 5A and 5B) through the thickness of the material in which the flexure hinge is made. The hole 51 provides a hinging capability to the structure of the flexure hinge 42. In each pair of flexure blades 41 the position of the hole 51 in one of the flexure blade is turned around with respect to the hole in the other flexure blade.

As described above, the first bearing block 36b comprises three or more, preferably four flexure hinges 42 that serve as interconnects between the inner and outer block members 38, 40 of the bearing block. Each flexure hinge (here corresponding to stack 42 of Fig. 4A) is formed by drilling and cutting through the depth of the unique block of material of the first bearing block. Cutting for example can be done by water-jet cutting , wire-EDM, laser- or plasma cutting.

In case of a uniblock design, this allows to create a contour that divides the first bearing block into the inner block member 38; 381 and the outer block member 40; 401. Peripheral edges of the inner block member 38; 381, outer block member 40; 401 are therefore separated by this contour, i.e., intra-block clearances 43. The inner and outer block members 38, 40; 381, 401 as well as the bearing through hole 40 span the same plane. The inner block member 38 is connected to the outer block member 40 through three or more flexure hinges, preferably four flexure hinges 42a, 42b, 42c, 42d each of them at a corner of the inner block member 48 connecting to the outer block member. The drilling and cutting to form the integral flexural hinge through the bearing block along axis A, B is performed along a predefined pattern, comprising a series of cuts parallel to the plane XY. A flexure hinge 42a comprises at least two sets of two parallel flexure plates 41, preferably four. The flexure plates are elongated blades between cut-outs 44 through a thickness of the bearing block, of which one cut-out of each set ends in a hole 51. As shown in fig 5A, the cut-outs may be aligned with respect to each other. Alternatively, a staggered layout of the flexure blades with relatively shifted positions can be made.

According to an embodiment, the cut-outs 44 and/or respective holes, forming part of the intra-block clearances 43 may be subsequently filled with a filler material. Such a filler material can comprise an elastic material that provides a damping effect to the flexural hinge allowing an adjustment of the mechanical behaviour of the flexure hinge. Additionally or alternatively, the filler material in the cut-outs 44 may be a thermal paste. The filler material may have a thermal conductivity that is at least 80%, preferably 90%, most preferably 100% of the thermal conductivity of the bearing block material. This allows that thermal differences across the flexural hinge and corresponding deformation of the flexural hinge due to difference in thermal expansion can be reduced.

The flexure hinges 42 (a-d) provide the position of the first cylinder 20 and its bearings relative to the position of the second cylinder 21. By the orientation of the flexure blades parallel to the thickness of the block member, the flexure hinge has relatively high stiffness in X and Y direction and lower stiffness in Z direction: at the same time the flexure hinge can be relatively flexible in Z direction while more rigid in X and Y directions.

The invention has been described with reference to embodiments of the invention. Obvious modifications and alterations will occur to the person skilled in the art upon reading and understanding the preceding detailed description. It is intended that the invention be construed as including all such modifications and alterations insofar as they come within the scope of the appended claims.

## Claims

1. A rotary die system (10), comprising:
- a base structure (14) configured to support first and second cylinders (20, 21) in a rotatable manner about substantially parallel nominal axes (A, B) that jointly span a plane (P), the cylinders defining two respective contacting surfaces (32, 33) along which the cylinders touch, as well as two respective processing surfaces (22, 23) that are interspaced by a non-zero gap (34) directed along an inter-axis direction (Z) along the plane (P);
- two first bearing blocks (36a, 36b) configured to enclose the first cylinder (20) from opposite axial sides along the respective axis (A), and configured to support the combined weight (Wz) of at least the first cylinder and the first bearing blocks;
wherein each of the first bearing blocks (36) is composed of:
- an inner block member (38) configured for accommodating a bearing (26a; 26b) holding a rotatable shaft of the first cylinder (20);
- an outer block member (40) with a cut-out accommodating the inner block member;
a tensioning element (16a, 16b; 161) for creating a biasing force (F1) on the inner block member relative to the outer block member, and
- a plurality of flexure hinges (42) that mechanically interconnect the inner and outer block members (38, 40), so as to allow the inner block member (38) to translate relative to the outer block member (40) along the inter-axis direction (Z), but to prevent relative motion of the inner block member along transverse directions (X, Y), while the rotary die system is operational and the cylinders are rotating;
wherein
either the inner block member, the outer block member, and the flexure hinges in each respective first bearing block (36) are jointly formed from a monolithic/unitary body of continuous solid material,
or the inner block member and the outer block member in each respective first bearing block (36) are interconnected by separate flexure hinges that are mounted in a fixed position in the cut-out between the inner and outer block member.

2. The rotary die system according to claim 1, wherein a flexure hinges comprises a pair of parallel flexure blades, the flexure blades are extending perpendicular to the inter-axis direction (Z), and a width of the flexure blades is substantially equal to a thickness of the first respective bearing block.

3. The rotary die system according to any one of claims 1 - 2, wherein the flexure hinges mounted in fixed position inbetween, consist of a spring steel.

4. The rotary die system (10) according to any one of claims 1 - 3, further comprising:
- two second bearing blocks (37) configured to enclose the second cylinder (21) from opposite axial sides along the respective axis (B) and configured to support the second cylinder; wherein each of the first and second cylinders (20, 21) is provided with a respective pair of first or second bearer rings (30, 31), each bearer ring defining the respective contacting surface (32, 33) along which the cylinders touch, such that both the first and second bearing blocks (36, 37) and the contacting surfaces (32, 33) establish a predefined initial distance (ΔZ1) between the axes (A, B) of the first and second cylinders (20, 21) before the rotary die system is energized;
wherein the inner and outer block members (38, 40) and flexure hinges (42) cooperate to allow translations of the inner block member (38) along the inter-axis direction (Z) in order to accommodate differential either positive or negative thermal expansion of the bearing blocks (36, 37) relative to the bearer rings (30, 31) along the inter-axis-direction (Z).

5. The rotary die system (10) according to any one of claims 1 - 4, wherein each respective first bearing block (36a, 36b; 361a, 361b) defines intra-block clearances (43) in-between peripheral surfaces of the inner block member (38;381), the outer block member (40; 401), and the flexure hinges (42) respectively.

6. The rotary die system (10) according to claim 5 wherein the flexure hinge accommodates a first filler material in cut-outs of the flexure hinge having a thermal conductivity of at least a similar order of magnitude as a thermal conductivity of the continuous material forming the first bearing block (36).

7. The rotary die system (10) according to any of the preceding claims wherein the flexure hinges provide a local reduced stiffness in the inter-axis direction (Z) relative to the stiffness in the plane defined by the transverse directions (X,Y).

8. The rotary die system (10) according to any of the preceding claims wherein the flexure hinges each consist of a stack of flexure plates integral with the metal body providing interconnections between the inner and outer block members.

9. A bearing block for a rotary die system, consisting of a metal body comprising an inner block member (38; 381) and an outer block member (40; 401) separated by a contour cut throughout the metal body (43), the inner and the outer block member being interconnected by flexure hinges (42) at at least three locations where the contour cut is interrupted.

10. A bearing block according to claim 9 wherein the flexure hinges each consist of a stack comprising at least a pair of flexure blades integral with the metal body, the pair of blades providing interconnections between the inner and outer block members.

11. A method for manufacturing a bearing block for a rotary die system comprising:
providing a rectangular metal body;
creating a central opening in the centre of the metal body;
creating a contour cut substantially around the central opening to substantially divide the body into an inner and outer block member;
providing flexure hinges as interruptions along the contour cut at at least three locations around the opening to interconnect the inner and outer block members or providing separate flexure hinges as interconnections between the inner and outer block member by mounting the flexure hinges in a fixed position in the cut-out between the inner block member and the outer block member.

12. The method according to claim 11, wherein the inner block member is enveloped at the circumference thereof by the outer block member.

13. The method according to claim 11, wherein the outer block member is U-shaped and the inner block member is T-shaped, an upright portion of the inner block member is positioned inbetween upright portions of the outer block member, and a horizontal top part of the inner block member is connected to each of the uprights of the outer block member.

14. The method according to claim 11, wherein the method provides that the flexure hinges each consist of a stack of at least a pair flexure blades that are integral with the metal body providing interconnections between the inner and outer block members;
